# EUROPÄISCHE PATENTSCHRIFT

(11) **EP 0 490 027 B1**
(45) Veröffentlichungstag und Bekanntmachung des Hinweises auf die Patenterteilung: **24.08.1994**
(21) Anmeldenummer: 91114751.0
(22) Anmeldetag: 02.09.1991
(51) Int. Cl.: F16K 41/10, F16K 39/02, F16K 31/365

(54) **Regelventil mit Druckausgleich**
Pressure compensated control valve
Soupape de réglage avec compensation de pression

(30) Priorität: 13.12.1990 DE 4039766
(43) Veröffentlichungstag der Anmeldung: 17.06.1992
(73) Patentinhaber: Firma Carl Freudenberg, 69469 Weinheim (DE)
(72) Erfinder: Mertens, Klaus, W-6944 Hemsbach (DE); Sausner, Andreas, W-6000 Frankfurt/M 71 (DE)

(56) Entgegenhaltungen:
- DE-A- 1 576 155
- FR-A- 2 576 079
- GB-A- 2 094 447
- US-A- 3 654 948

## Beschreibung

Die Erfindung betrifft ein Regelventil für fließfähige Medien, umfassend einen in einem Ventilgehäuse angeordneten Stellkolben, der durch einen Antrieb verschiebbar und mit seiner Stirnfläche an einem Ventilsitz anlegbar ist, wobei das Ventilgehäuse vollständig mit Flüssigkeit gefüllt ist.

Regelventile dieser Art sind allgemein bekannt. Danach verschließen z.B. Pilzventile die von außen durch Antriebe betätigbar sind, Leitungen einer Verbrennungskraftmaschine. Die Pilzventile bestehen dabei aus einem Ventilschaft und einem, in axialer Richtung anschließenden Ventilteller zumeist aus vollem Material. Die Ventile sind beispielsweise in fluiddurchströmbaren Leitungen angeordnet und von Fluid umströmbar. Außerdem können den Ventilen Federelemente zur Unterstützung der Antriebe zugeordnet sein.

Dabei ist jedoch zu beachten, daß die Kräfte zur Betätigung der Ventile durch unterschiedlich hohe Drücke, beispielsweise in einem Kühlsystem, variieren. Die Stellgenauigkeit zur Regulierung des Massenstromes durch das System ist daher nur unbefriedigend. Außerdem ist eine Abdichtung des Verstellmechanismus gegen aggressive fließfähige Medien mit den darin enthaltenen Verunreinigungen problematisch.

Der Erfindung liegt die Aufgabe zugrunde, ein Regelventil der eingangs genannten Art derart weiterzuentwickeln, daß sich eine wesentliche Verbesserung der Stellgenauigkeit des Ventils bei gleichzeitigem Schutz des Verstellmechanismus vor aggressiven Medien, Verschleiß und Verunreinigungen ergibt.

Diese Aufgabe wird erfindungsgemäß mit den kennzeichnenden Merkmalen von Anspruch 1 gelöst.

Auf vorteilhafte Ausgestaltung nehmen die Unteransprüche bezug.

Bei dem erfindungsgemäßen Regelventil ist es vorgesehen, daß der Stellkolben durch einen in Richtung seiner Achse beiderseits flüssigkeitsdurchlässigen Hohlkörper gebildet ist, der einen Hohlraum umschließt, daß der Hohlraum durch ein sich quer zu seiner Achse erstreckendes erstes Dichtglied gegenüber dem Ventilgehäuse und durch ein sich quer zu seiner Achse erstrekkendes zweites Dichtglied gegenüber einer in dem Hohlraum enthaltenen und in Richtung der Achse verschiebbaren Trennwand abgedichtet ist und daß das Ventilgehäuse auf der von dem Ventilsitz abgewandten Seite des ersten und des zweiten Dichtgliedes mit einer hydraulischen, inkompressiblen Schutzflüssigkeit gefüllt ist. Durch die Anordnung der Dichtelemente und der Trennwand ist der Verstellmechanismus des Hohlkörpers vor beispielsweise im Kühlkreislauf befindlichen aggressiven Medien geschützt, ebenso wie vor Verschleiß, Verschmutzung, Korrosion und Einfrieren bei tiefen Temperaturen.

Das erste Dichtglied und/oder das zweite Dichtglied kann durch eine Membran gebildet sein. Vorteilhafterweise ist das erste und das zweite Dichtglied durch eine einstückig ineinander übergehende Dichtung gebildet. Sind die Dichtungen als Membran ausgeführt, kann die Membran beispielsweise als Rollmembran ausgebildet sein. Membranen haben den Vorteil, daß sie dem Verstellmechanismus bei Betätigung besonders wenig Widerstand entgegensetzen. Die Membran ist je nach Druckverteilung und Bewegungsrichtung des strömenden Mediums am Gehäuse festgelegt. Eine einteilige Membran ist einfacher montierbar, bietet erhöhte Sicherheit bezüglich der Dichtheit und ist wirtschaftlicher herzustellen. Auch eine zweiteilige Ausführung der Membran ist möglich.

Dabei ist eine erste Membran zwischen dem Gehäuse und dem Außenumfang der Hohlkörpers angebracht und eine zweite Membran am Innenumfang der Hohlkörper. An Stelle der Membran entlang des Außenumfangs kann, bei entsprechender Bearbeitung der Kontaktflächen, auch eine Dichtung verwendet werden, die jedoch aufgrund der erhöhten Reibung und des damit verbundenen höheren Verschleißes die hohe Stellgenauigkeit und die Gebrauchsdauer des Regelventils beeinträchtigt.

Das erste Dichtglied und/oder das zweite Dichtglied können durch einen Faltenbalg gebildet sein. Auch diese Dichtungen könnnen ineinander übergehend oder zweiteilig ausgeführt sein. Faltenbälge bieten ebenfalls den Vorteil großer Leichtgängigkeit in Bewegungsrichtung des Hohlkörpers und bieten eine größere Stabilität und Steifigkeit in radialer Richtung. Die Faltenbälge können gegebenenfalls mit Versteifungen ausgestattet sein, die die Gebrauchsdauer weiter erhöhen.

Die Trennwand im inneren des Hohlkörpers kann auch durch einen Kolben gebildet sein. Ein Kolben, der durch ein Dichtglied entlang des Innenumfangs des Hohlkörpers abgedichtet sein muß, weist bei geringfügig höherer Reibung eine längere Lebensdauer auf.

Der Kolben kann durch eine Versteifungsplatte gebildet sein die an dem zweiten Dichtglied festgelegt ist. Hierbei ist von Vorteil, daß sich die Membran nicht parabelähnlich verformt. Dadurch kann der Kolben über vergleichsweise lange Strecken in axialer Richtung bewegt werden ohne daß die Membran an den Stirnseiten des Hohlkörper anstößt oder beschädigt wird. Die Baulänge des Hohlkörper in axialer Richtung kann dadurch verkürzt werden. Außerdem wird durch die Versteifungsplatte die mechanische Belastung der Membran reduziert und ihre Gebrauchsdauer erhöht.

Dem Hohlkörper kann auf der dem Ventilsitz zugewandten Stirnfläche eine Lochplatte vorgeschaltet sein. Durch die Größe, die Anzahl und die Position der Ausnehmungen in der Lochplatte ist der Ausgleich eines bestimmten Druckes aus der Druckverteilung im Bereich der Lochplatte gezielt möglich.

Der Ventilsitz kann in Bewegungsrichtung des Hohlkörpers justierbar und am Ventilsitzgehäuse festgelegt sein. Der justierbare Ventilsitz ermöglicht eine genaue Abstimmung der Lage des Ventilsitzes in bezug auf den Stellweg des Hohlkörpers durch den Verstellmechanismus. Der Ventilsitz kann beispielsweise durch Abstandshülsen oder Distanzarme am Ventilgehäuse festgelegt sein. Durch diese Anordnung ist ein einfacher Austausch des justierbaren Ventilsitzes in Verbindung mit einer einfachen Justage des Ventilsitzes in bezug auf den Hohlkörper weitgehend unabhängig von der Gehäusebeschaffenheit möglich.

Dem Hohlkörper können in axialer Richtung beiderseits benachbart Federelemente zugeordnet sein, die eine voneinander abweichende Federkennlinie aufweisen. Durch die Verwendung von Federelementen mit unterschiedlichen Federkennlinien können bei weitgehender konstruktiver Gleichheit besonders wirtschaftlich Thermostatventile hergestellt werden, die den Durchfluß durch die Leitung ohne Betätigungskraft des Verstellmechanismus freigeben oder schließen. Fällt beispielsweise der Verstellmechanismus des Hohlkörpers aus, sollte dieser selbständig in eine sichere, für die angeschlossenen Bauteile ungefährliche Position übergehen. Im Kühlkreislauf einer Verbrennungskraftmaschine sollte z.B. die Kurzschlußleitung verschlossen und die Kühlerleitung geöffnet werden. Beide Ventile unterscheiden sich dann nur durch vertauschte Federelemente.

Die Federelemente können als Schraubenfedern ausgebildet sein. Vorteilhaft sind die einfache Montage und die große Wirtschaftlichkeit.

Dem Hohlkörper kann eine elektromagnetischer Antrieb zugeordnet sein, der eine besonders einfache Betätigung des Regelventiles in einer Richtung ermöglicht. Zur Bewegungsumkehr ist zumindest ein Federelement vorgesehen.

Dem Hohlkörper kann ein Servomotor zugeordnet sein, der eine besonders exakte Betätigung des Regelventiles in beide Richtungen erlaubt. Ein Federelement ist bei einwandfreier Funktion des Servomotors nicht erforderlich, kann aber zur Sicherheit dem Hohlkörper zugeordnet sein, um bei defektem Verstellmechanismus das Ventil in die günstigste, für die angeschlossene Maschine ungefährlichste Position zu bewegen.

Der Gegenstand der Erfindung wird nachfolgend am Beispiel eines Kühlsystems an Hand der in der Anlage beigefügten Zeichnungen weiter verdeutlicht.
Es zeigen:
Fig. 1 ein Regelventil mit zwei Membranen und einer Feder,
Fig. 2 ein Regelventil mit zwei Membranen und zwei Federn,
Fig. 3 ein Regelventil mit einer Membran und zwei Federn und
Fig. 4 ein Regelventil mit einer Membran, zwei Federn und justierbarem Ventilsitz.

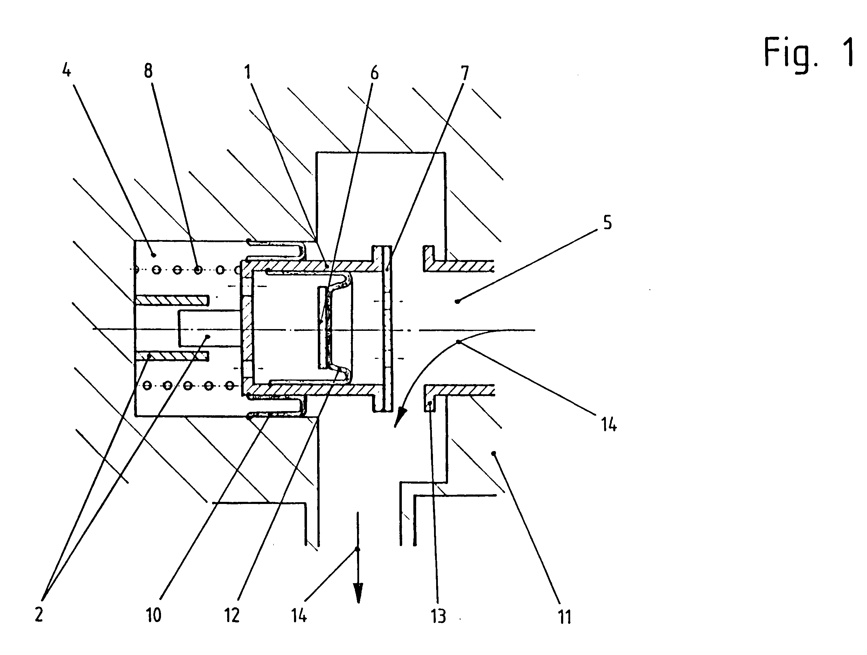

Fig. 1 zeigt ein Regelventil, im wesentlichen bestehend aus einem Hohlkörper 1, einer Außenumfangsmembran 10, die zwischen Außenumfang des Hohlkörpers 1 und Ventilgehäuse 11 angeordnet ist, einer Innenumfangsmembran 12, die am Innenumfang des Hohlkörpers 1 befestigt ist und einem Verstellmechanismus 2 zur Betätigung des Hohlkörpers 1. Ohne Betätigungskraft des Verstellmechanismus, beispielsweise eines Elektromagneten, würde der Hohlkörper durch die Federkraft des dem Druckausgleichsraum 4 zugewandten Federelementes 8 auf den Ventilsitz 13 in Geschlossenstellung bewegt. Die Außenumfangs- 10 und Innenumfangsmembran 12 trennen den nicht durchströmbaren Druckausgleichsraum 4 von dem mediendurchströmten Raum 5. Die Strömungsrichtung 14 des fließfähigen Mediums ist in der Zeichnung durch Richtungspfeile dargestellt.

Dem Höhlkörper 1 kann in axialer Richtung, dem durchströmbaren Raum 5 zugewandt, eine Lochplatte 7 vorgeschaltet sein. Neben dem Druckausgleich sorgt die Schutzflüssigkeit im Druckausgleichsraum 4 für einen wirksamen Schutz des Verstellmechanismus 2 vor Verschleiß, Verschmutzung, Korrosion und Beeinträchtigung der Funktion durch tiefe Temperaturen. Die Innenumfangsmembran 12 wird auf der, dem durchströmbaren Raum 5 zugewandten Seite mit dem Systemdruck beaufschlagt und gibt diesen Druck im wesentlichen über die Innenumfangsmembran 12 an den Druckausgleichsraum 4 weiter. Wegen der inkompressiblen Schutzflüssigkeit bleibt das Volumen des Druckausgleichsraumes 4 auch bei sich änderndem Druck, beispielsweise im einem Kühlsystem, nahezu konstant. Herrscht auf beiden Seiten der Innenumfangsmembran 12 der gleiche Druck (Druckausgleich), muß der Hohlkörper 1 nur noch gegen mechanische Kräfte wie z.B. die Reibungskräfte und, wenn Federelemente 8 vorhanden, gegen die Federkräfte betätigt werden. Durch den Druckausgleich wirken nur sehr geringe veränderlichen hydraulischen Druckkräfte auf den Verstellmechanismus 2 des Hohlkörpers 1, wodurch eine große Stellgenauigkeit erzielt wird. Bei Bewegung des Hohlkörpers 1 in axialer Richtung verändert die Innenumfangsmembran 12 mit der Versteifungsplatte 7 wegen der Inkompressibilität des Druckausgleichsmediums ihre Lage nur sehr wenig, relativ zum Ventilgehäuse 11.

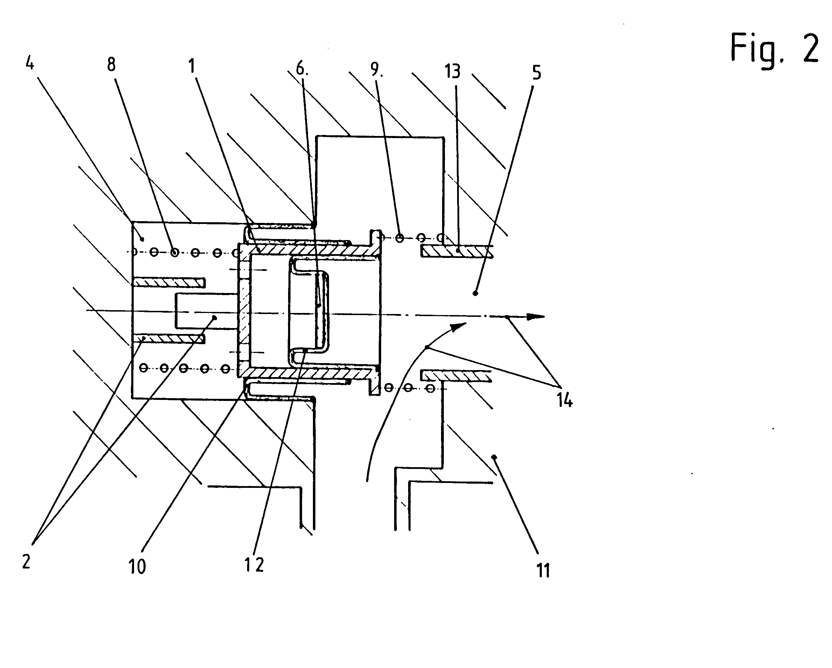

Fig. 2 bildet das in Fig. 1 dargestellte Ausführungsbeispiel in der Weise weiter, daß in axialer Richtung beiderseits benachbart zum Hohlkörper 1 Federelemente 8; 9 mit unterschiedlichen Federkennlinien angeordnet sind. Dieses Regelventil kann bei weitgehend konstruktiver Gleichheit sowohl für den Fall "ohne Betätigungkraft des Verstellmechanismus offen" als auch für den Fall "ohne Betätigungskraft des Verstellmechanismus geschlossen" verwendet werden.

Für die Variante bei der das Ventil beispielsweise wegen eines defekten Verstellmechanismus in Offenstellung gedrückt und/oder gehalten werden soll, muß das im durchströmbaren Raum 5 angeordnete Federelement 9 selbst bei offenem Ventil eine geringfügig größere Federkraft aufweisen, als das im Druckausgleichsraum 4 angeordnete Federelement 8. Dieser Fall findet beispielsweise Anwendung wenn das Regelventil in Offenstellung einen Kühlerkreislauf freigibt; ein defekter Verstellmechanismus 2 hat dann keine thermisch überbeanspruchte oder sogar beschädigte Maschine zur Folge. Für die Variante, daß das Regelventil bei Ausfall des Verstellmechanismus 2 in Geschlossenstellung gedrückt und/oder gehalten werden soll, muß das im Druckausgleichsraum 4 angeordnete Federelement 8 selbst bei geschlossenem Ventil eine größere Federkraft aufweisen als das im durchströmbaren Raum 5 angeordnete Federelement 9. Eine solche Vorrichtung ist beispielsweise für ein Kurzschlußkreislauf-Regelventil in einem Kühlsystem sinnvoll. Im Schadensfall wird der Kurzschlußkreislauf geschlossen und das Kühlmittel strömt, ohne Gefahr der Überhitzung oder Beschädigung der Maschine, über den Kühlkreislauf. Von besonderem Vorteil an der in dieser Fig. dargestellten Variante ist, daß durch einfaches Austauschen der Federelemente 8; 9 bei ansonsten gleichem Regelventil sämtliche Anwendungsmöglichkeiten abgedeckt werden können. Selbst nachträgliche Änderungen der Öffnungscharakteristik des Regelventiles sind möglich.

Das Wirkungsprinzip des Druckausgleichs ist dasselbe, wie in Fig. 1. Wegen der in diesem Beispiel geänderten Druckverhältnisse und der damit verbundenen, geänderten Strömungsrichtung 14 des Kühlmittels, ist eine geänderte Befestigung der Membranen 10, 12 sinnvoll.

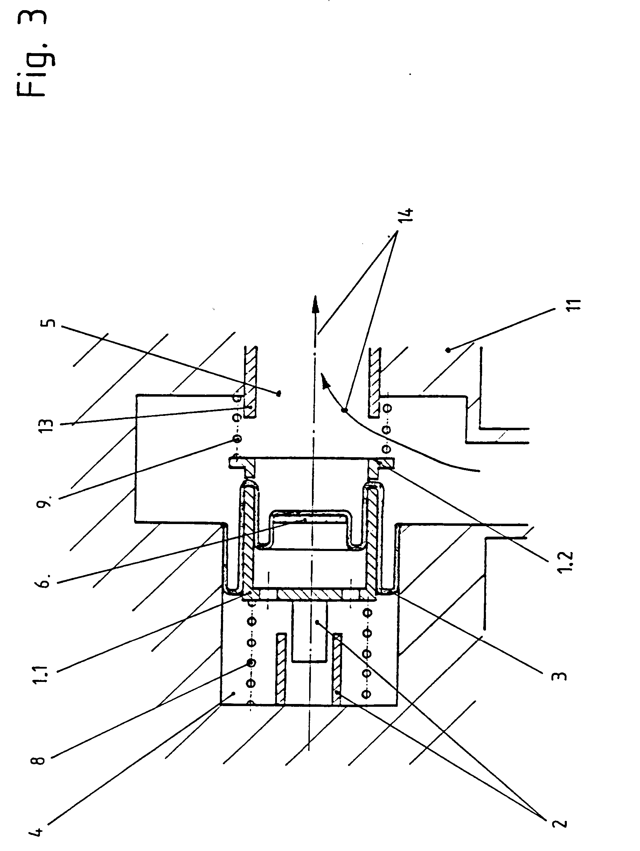

Fig. 3 bildet die in Fig. 1 und Fig. 2 dargestellten Ausführungsbeispiele in der Weise weiter, daß die Dichtung 3 zwischen dem Druckausgleichsraum 4 und dem von fließfähigem Medium durchströmbaren Raum 5 einteilig ausgeführt ist. Die Dichtung kann beispielsweise durch Membranen und/oder Faltenbälge gebildet sein. Neben einer einfacheren, kostengünstigeren Herstellbarkeit, bietet die einteilige Dichtung 3 darüberhinaus den Vorteil größerer Dichtsicherheit. Der zweiteilige Hohlkörper 1.1, 1.2 wird durch die Federkraft zumindest einer Feder gegen die Reaktionskraft des Verstellmechanismus 2 zusammengehalten. Die Länge der Dichtung 3 und ihre Befestigungspunkte sind, gemäß den Fig. 1 bis 3 in Abhängigkeit vom Verstellweg des Hohlkörpers und der Strömungsrichtung 14 des strömenden Mediums zu wählen.

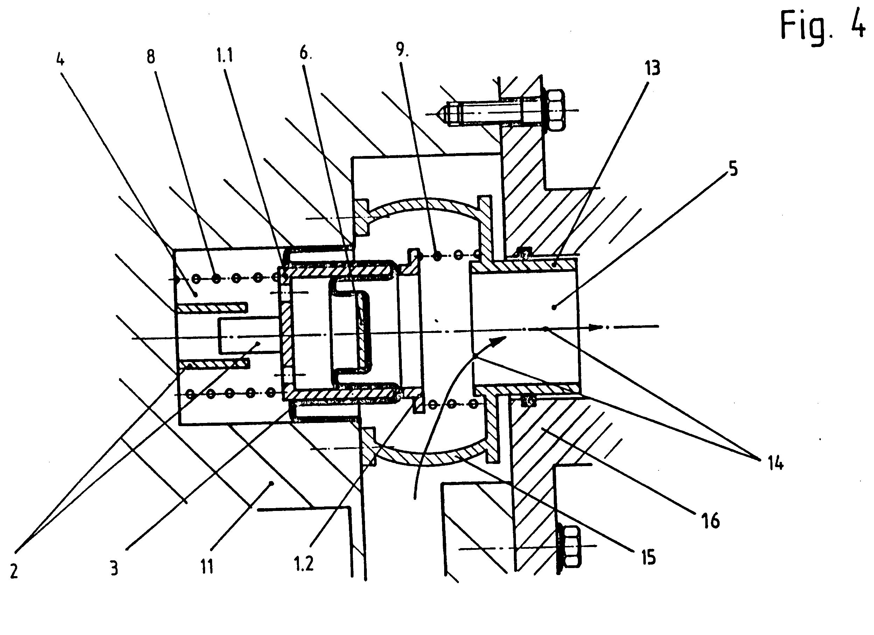

Fig. 4 zeigt ein Ausführungsbeispiel ähnlich dem Regelventil aus Fig. 3, jedoch mit justierbarem Ventilsitz, der weitgehend unabhängig von dem ihn aufnehmenden Gehäuse zum Hohlkörper 1 in Position bringbar ist. Dabei ist der justierbare Ventilsitz 13 am Ventilgehäuse 11 festgelegt. Die Justage erfolgt beispielsweise durch am justierbaren Ventilsitz 13 festgelegte Arme 15, die den Abstand zwischen Hohlkörper 1 und Ventilsitz 13 genau festlegen. Diese Ausführung ist vorteilhaft in Hinblick auf den Austausch des justierbaren Ventilsitzes 13. Außerdem ist die Justage des Ventilsitzes 13 weitgehend unabhängig von den Bearbeitungstoleranzen des anschließenden Kreislaufgehäuses 16.

## Patentansprüche

1. Regelventil für fließfähige Medien, umfassend einen in einem Ventilgehäuse (11) angeordneten Stellkolben, der durch einen Antrieb verschiebbar und mit seiner Stirnfläche an einen Ventilsitz (13) anlegbar ist, wobei das Ventilgehäuse (11) vollständig mit Flüssigkeit gefüllt ist, dadurch gekennzeichnet, daß der Stellkolben durch einen in Richtung seiner Achse beiderseits flüssigkeitsdurchlässigen Hohlkörper (1) gebildet ist, der einen Hohlraum umschließt, daß der Hohlraum durch ein sich quer zu seiner Achse erstreckendes, erstes Dichtglied (10) gegenüber dem Ventilgehäuse (11) und durch ein sich quer zu seiner Achse erstreckendes zweites Dichtglied (12) gegenüber einer in dem Hohlraum enthaltenen und in Richtung der Achse verschiebbaren Trennwand (6) abgedichtet ist und daß das Ventilgehäuse (11) auf der von dem Ventilsitz (13) abgewandten Seite des ersten (10) und des zweiten (12) Dichtgliedes mit einer hydraulischen, inkompressiblen Schutzflüssigkeit gefüllt ist.

2. Regelventil nach Anspruch 1, dadurch gekennzeichnet, daß das erste Dichtglied (10) und/oder das zweite Dichtglied (12) durch eine Membran gebildet ist.

3. Regelventil nach Anspruch 1, dadurch gekennzeichnet, daß das erste Dichtglied (10) und/oder das zweite Dichtglied (12) durch einen Faltenbalg (15) gebildet ist.

4. Regelventil nach Anspruch 1 bis 3, dadurch gekennzeichnet, daß das erste und das zweite Dichtglied durch eine einstückig ineinander übergehende Dichtung (3) gebildet ist.

5. Regelventil nach Anspruch 1 bis 4, dadurch gekennzeichnet, daß die Trennwand (6) durch einen Kolben gebildet ist.

6. Regelventil nach Anspruch 5, dadurch gekennzeichnet, daß der Kolben durch eine Versteifungsplatte gebildet ist und daß die Versteifungsplatte an dem zweiten Dichtglied (12) festgelegt ist.

7. Regelventil nach Anspruch 1 bis 6, dadurch gekennzeichnet, daß dem Hohlkörper (1) auf der dem Ventilsitz (13) zugewandten Stirnfläche eine Lochplatte (7) vorgeschaltet ist.

8. Regelventil nach Anspruch 7, dadurch gekennzeichnet, daß der Ventilsitz (13) in Bewegungsrichtung des Hohlkörpers (1) justierbar ist und daß der Ventilsitz (13) am Ventilgehäuse (11) festgelegt ist.

9. Regelventil nach Anspruch 1 bis 8, dadurch gekennzeichnet, daß dem Hohlkörper (1) in axialer Richtung beiderseits benachbart Federelemente (8, 9) zugeordnet sind und daß die Federelemente (8, 9) voneinander abweichende Federkennlinien aufweisen.

10. Regelventil nach Anspruch 9, dadurch gekennzeichnet, daß die Federelemente (8, 9) als Schraubenfedern ausgebildet sind.

11. Regelventil nach Anspruch 1 bis 10, dadurch gekennzeichnet, daß dem Hohlkörper (1) als Verstellmechanismus (2) ein elektromagnetischer Antrieb zugeordnet ist.

12. Regelventil nach Anspruch 1 bis 10, dadurch gekennzeichnet, daß dem Hohlkörper (1) als Verstellmechanismus (2) ein Servomotor als Antrieb zugeordnet ist.

## Claims

1. A control valve for fluid media comprising a control piston which is arranged in a valve housing (11), can be displaced by means of a drive and can be positioned with its end face against a valve seat (13), the valve housing (11) being completely filled with fluid, characterized in that the control piston is formed by a hollow body (1) which is permeable to fluid at both ends in the direction of its axis and surrounds a hollow space, in that the hollow space is sealed off relative to the valve housing (11) by a first sealing member (10) extending transversely to its axis and is sealed off relative to a dividing wall (6) contained in the hollow space and displaceable in the direction of the axis by a second sealing member (12) extending transversely to its axis, and in that, on that side of the first (10) and of the second (12) sealing member which faces away from the valve seat (13), the valve housing (11) is filled with a hydraulic incompressible protective fluid.

2. A control valve according to claim 1, characterized in that the first sealing member (10) and/or the second sealing member (12) is formed by a diaphragm.

3. A control valve according to claim 1, characterized in that the first sealing member (10) and/or the second sealing member (12) is formed by a bellows (15).

4. A control valve according to any of claims 1 to 3, characterized in that the first and the second sealing member are formed by an one-piece integral seal (3).

5. A control valve according to any of claims 1 to 4, characterized in that the dividing wall (6) is formed by a piston.

6. A control valve according to claim 5, characterized in that the piston is formed by a reinforcing plate and in that the reinforcing plate is fixed to the second sealing member (12).

7. A control valve according to any of claims 1 to 6, characterized in that a perforated plate (7) is arranged in front of the hollow body (1), on the end face facing the valve seat (13).

8. A control valve according to claim 7, characterized in that the valve seat (13) is adjustable in the direction of motion of the hollow body (1) and in that the valve seat (13) is fixed to the valve housing (11).

9. A control valve according to any of claims 1 to 8, characterized in that spring elements (8, 9) are associated with the hollow body (1), lying axially adjacent to it at both ends, and in that the spring elements (8, 9) have spring characteristics which differ from one another.

10. A control valve according to claim 9, characterized in that the spring elements (8, 9) are designed as helical springs.

11. A control valve according to any of claims 1 to 10, characterized in that, as an adjusting mechanism (2), the hollow body (1) has assigned to it an electromagnetic drive.

12. A control valve according to any of claims 1 to 10, characterized in that, as an adjusting mechanism (2), the hollow body (1) has assigned to it a servomotor as a drive.

## Revendications

1. Soupape de réglage pour milieux coulants, comprenant un piston de réglage, situé dans une boîte à soupape (11), qui peut être déplacé par une commande et mis en appui, par sa face frontale, contre un siège de soupape (13), la boîte à soupape (11) étant entièrement remplie de liquide, caractérisée en ce que le piston de réglage est constitué par un corps creux (1) perméable aux liquides à ses deux extrémités dans le sens de son axe et enfermant un espace vide, en ce que l'espace vide est étanchéifié, par rapport à la boîte à soupape (11), au moyen d'un premier élément d'étanchéité (10) s'étendant perpendiculairement à son axe et, par rapport à une paroi de séparation (6) mobile en direction de l'axe et contenue dans l'espace vide, au moyen d'un deuxième élément d'étanchéité (12) s'étendant perpendiculairement à son axe, et en ce que la boîte à soupape (11) est remplie, du côté du premier (10) et du deuxième (12) élément d'étanchéité éloigné du siège de soupape (13), d'un liquide hydraulique incompressible de protection.

2. Soupape de réglage selon la revendication 1, caractérisée en ce que le premier élément d'étanchéité (10) et/ou le deuxième élément d'étanchéité (12) est/sont constitué/s par une membrane.

3. Soupape de réglage selon la revendication 1, caractérisée en ce que le premier élément d'étanchéité (10) et/ou le deuxième élément d'étanchéité (12) est/sont constitué/s par un soufflet (15).

4. Soupape de réglage selon les revendications 1 à 3, caractérisée en ce que le premier et le deuxième éléments d'étanchéité sont constitués par une garniture (3) formée d'une seule pièce confondue.

5. Soupape de réglage selon les revendications 1 à 4, caractérisée en ce que la paroi de séparation (6) est constituée par un piston.

6. Soupape de réglage selon la revendication 5, caractérisée en ce que le piston est constitué par une plaque de renforcement et en ce que la plaque de renforcement est fixée sur le deuxième élément d'étanchéité (12).

7. Soupape de réglage selon les revendications 1 à 6, caractérisée en ce que l'on intercale, sur la face frontale du corps creux (1) dirigée vers le siège de soupape (13), une plaque percée (7).

8. Soupape de réglage selon la revendication 7, caractérisée en ce que le siège de soupape (13) est ajustable dans le sens du mouvement du corps creux (1) et en ce que le siège de soupape (13) est fixé sur la boîte à soupape (11).

9. Soupape de réglage selon les revendications 1 à 8, caractérisée en ce que des éléments à ressort (8,9) sont adjoints de manière contiguë au corps creux (1), sur ses deux côtés dans le sens axial et en ce que les éléments à ressort (8,9) présentent des courbes caractéristiques différant l'une de l'autre.

10. Soupape de réglage selon la revendication 9 caractérisée en ce que les éléments à ressort (8,9) sont constitués par des ressorts cylindriques.

11. Soupape de réglage selon les revendications 1 à 10, caractérisée en ce qu'une commande électromagnétique est associée au corps creux (1) constituant le mécanisme de réglage (2).

12. Soupape de réglage selon les revendications 1 à 10, caractérisée en ce qu'une commande constituée par un servomoteur est associée au corps creux (1) constituant le mécanisme de réglage (2).
